# EUROPEAN PATENT APPLICATION

(11) **EP 1 366 661 A1**
(43) Date of publication of application: **03.12.2003**
(21) Application number: 03252834.1
(22) Date of filing: 06.05.2003
(51) Int. Cl.: A01N 3/00, A01N 25/10, A01N 27/00, B01J 8/22

(54) **Method and device for the generation of cyclopropene compounds**

(30) Priority: 14.05.2002 US 380440 P
(71) Applicant: ROHM AND HAAS COMPANY, Philadelphia, Pennsylvania 19106-2399 (US)
(72) Inventor: Kostansek, Edward Charles, Buckingham, Pennsylvania 18912 (US); Weisel, Leah Anne, Jamison, Pennsylvania 18929 (US); Watts, Carrie Lynn, Lansdale, Pennsylvania 19446 (US)
(74) Representative: Kent, Venetia Katherine

(57) **Abstract**

A device and method for generating cyclopropene gas comprising bubbling a gas through a vessel that contains water. A cyclopropene/cyclodextrin complex is added to the water to form an aqueous suspension. Cyclopropenes are used to inhibit the ethylene response in plants and plant products, such as fruits and vegetables. The device of the invention may treat small volume facilities as well as very large volume storage facilities, such as warehouses and the like. The bubbled gas rapidly and completely liberates the cyclopropene gas from its cyclodextrin carrier to provide a cost effective and efficient treatment against the ethylene response in plants.

## Description

The present invention relates to a new method and device for the generation of cyclopropene compounds. The method and device, referred to herein as a cyclopropene generator, enable the release of gaseous cyclopropene into a specifically targeted, sealed atmosphere. The cyclopropene generator can be in the form of a vessel which provides a convenient means for delivering large amounts of cyclopropene compounds to plants in order to preserve their same quality as when they were harvested. The term "plant" is used in a generic sense herein, and encompasses woody stemmed plants, such as trees and shrubs, and includes whole plants and any portions thereof, such as field crops, potted plants, cut flowers (stems and flowers) and harvested fruits and vegetables. Such cyclopropene compounds and their derivatives, such as methylcyclopropene, are capable of inhibiting the ethylene response in plants. The cyclopropene generator is particularly useful where plants are stored in enclosed large volume areas, such as warehouses. The cyclopropene generator can efficiently deliver a treatment dosage appropriate for the plant content and cubic volume of the storage facility.

### BACKGROUND

It is well known that ethylene can cause the premature death of plants or plant parts including, for example, flowers, leaves, fruits, and vegetables through binding with certain receptors in the plant. Ethylene also promotes leaf yellowing and stunted growth as well as premature fruit, flower, and leaf drop. Because of these ethylene-induced problems, very active and intense research presently concerns the investigation of ways to prevent or reduce the deleterious effects of ethylene on plants. U.S. Pat. No. 5,518,988 discloses the use of cyclopropene and its derivatives, including methylcyclopropene, as effective blocking agents for ethylene binding. However, a major problem with these compounds is that they are typically unstable gases which present explosive hazards when compressed, making them difficult to deliver.

As a solution to this problem, U. S. Patent No. 6,017,849 discloses a method of incorporating these gaseous compounds into a molecular encapsulation agent complex in order to stabilize their reactivity and thereby provide a convenient and safe means of storing, transporting and applying or delivering the active compounds to plants, flowers, fruits or vegetables. For the most active cyclopropene derivative disclosed in U. S. Patent No. 5,518,988, 1-methylcyclopropene, the preferred molecular encapsulation agent is a cyclodextrin, with α-cyclodextrin being the most preferred. The application or delivery of these active compounds to plants, flowers, fruits or vegetables is accomplished by simply adding water to the molecular encapsulation agent complex. The complex is prepared according to the methods disclosed in U. S. Patent No. 6,017,849 which provides the material in the form of a powder.

Water is fairly effective at releasing cyclopropene if the amount of cyclopropene/cyclodextrin complex is on the order of less than about 5 grams. Such a small quantity can be liberated in about 5 to 30 minutes and is suitable for treating small volume facilities, such as enclosed cargo trucks and shipping containers. However, when large volume storage facilities, on the scale of large warehouses, must be treated, the amount of cyclopropene/cyclodextrin complex that is usually required is measured in kilograms, in amounts ranging up to about 5 kilograms.

One of the primary problems in treating such large scale facilities is that large amounts of water would be required to liberate the cyclopropene gas from its complex. Traditionally, water is required in amounts of as much as 20 times, by weight, of the amount of cyclopropene/cyclodextrin complex. Due to environmental regulations and safety standards, the more water that must be disposed of safely increases handling complexity and cost burdens for the storage facility. It would be advantageous to accomplish the liberation of large quantities of cyclopropene gas from its carrier complex using only the minimum amount of water necessary.

It is often of value to the handler of the plants to be able to treat the stored plants for ethylene inhibition in as short a time as possible. Even though water will liberate the cyclopropene compound which is entrapped within its cyclodextrin carrier, this process may take a long time, especially if a large quantity of the powdered complex is added to an even larger volume of water. On a large scale, this process will take days and may nonetheless leave much cyclopropene unliberated. Constant stirring has not been found to either increase the overall amount of cyclopropene liberated or to reduce the amount of time for releasing even a portion of the cyclopropene contained within the cyclopropene/cyclodextrin complex.

It is unprofitable to leave large numbers of plants sitting around for long periods of time, such as days, in order to adequately treat them for ethylene inhibition. Further, since the storage facility must remain sealed off from the outside atmosphere during treatment, the plant processor must be in a position to permit large amounts of storage floor space to remain dormant while the treatment is occurring.

What is needed therefore is a system for liberating cyclopropene gas from its carrier molecules that is rapid, efficient and requires the use of a minimal amount of water as the liberating agent. This system must also be large enough to effectively treat plants that are contained within a large scale storage facility, such as a warehouse. The present invention solves these problems by employing a method to bubble a gas through an aqueous suspension of a cyclopropene/cyclodextrin complex. The device of the invention is one way to implement the practice of this method.

### SUMMARY OF THE INVENTION

In one aspect, the subject invention consists of a device for generating a cyclopropene gas from a carrier molecule complex comprising:
- a vessel having at least one continuous, substantially vertical side wall and a bottom surface which define an interior space capable of retaining an aqueous suspension, wherein the aqueous suspension comprises a chemical complex of cyclopropene and a carrier molecule;
- at least one nozzle having an input end and an output end, said nozzle being sealably secured within a hole in the vessel and situated such that the input end of the nozzle is directed to the exterior of the vessel and the output end is directed to the interior space of the vessel;
- means for generating a sparge gas through the aqueous suspension, located in close proximity to the vessel; and
- a conduit having an input end and an output end, said input end sealably connected to the means for generating the sparge gas and said output end being sealably connected to the input end of the nozzle.

A second aspect of the invention is a method to deliver a cyclopropene gas by bubbling a sparge gas through an aqueous suspension which contains the cyclopropene gas. By this bubbling process the cyclopropene may be released from its cyclodextrin complex as rapidly as desired. The process of bubbling gas through the water is referred to as a "gas sparge". It has been determined that the best location to introduce the sparge gas is at the bottom of the vessel containing the water, preferably at the center of the bottom of the vessel. The sparge gas is released into the water of the vessel from the output end of a nozzle. Although the vessel may comprise a flat bottom, it is preferred that the bottom forms a conical shape, with the gas nozzle at the center thereof. With this configuration, there is little chance, if any, of any cyclopropene remaining bound to its cyclodextrin carrier due to an amount of the powdered complex dropping out of suspension into "dead zones" which might be found around the perimeter of the flat bottom of the vessel. This provides an added benefit to the user, in that it is therefore possible to calculate with precision the exact amount of cyclopropene needed to treat the plants within any storage facility, as determined by the volume of the storage facility and the treating needs of the specific plants.

### DESCRIPTION OF THE DRAWINGS

Fig. 1 shows a cross-sectional view of one embodiment of the invention.
Fig. 2 shows a cross-sectional view of a preferred embodiment of the invention.
Fig. 3 shows an alternative embodiment for the delivery of the sparge gas.

### DETAILED DESCRIPTION OF THE INVENTION

The present invention comprises a device and method which facilitates the delivery of a cyclopropene gas to plants in an enclosed space. The delivery method comprises bubbling a gas through a volume of water that contains a suspension of a cyclopropene/cyclodextrin complex. The bubbling action provides the necessary energy to liberate the cyclopropene molecule from its carrier molecule, cyclodextrin, and then facilitate cyclopropene's transit from the water into the atmosphere. The device of the invention efficiently facilitates the delivery of a desired of cyclopropene gas to the sealed atmosphere of a storage facility.

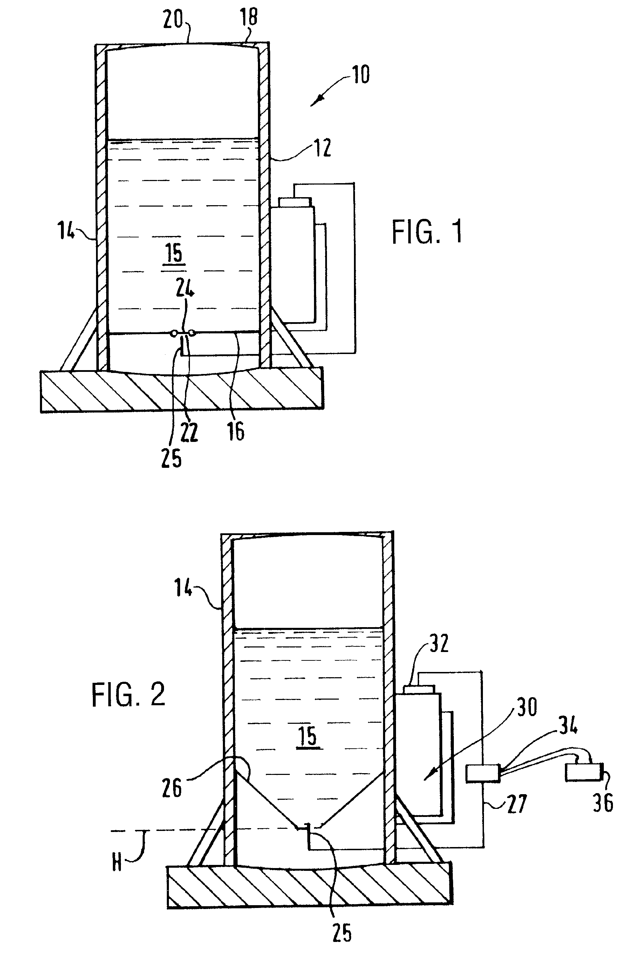

Referring now to Figure 1, a cylcopropene generator 10 is shown. It comprises a vessel 12 suitable for containing a liquid, preferably water. The vessel 12 may be substantially cylindrical in shape, as exemplified in Fig.1. However, other shapes may be utilized, as described hereinbelow.

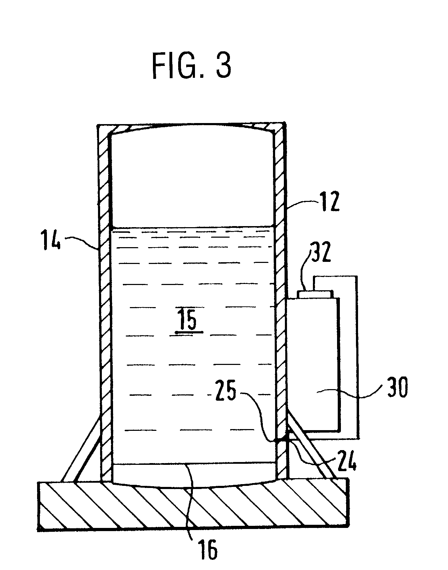

The cylcopropene generator 10 is comprised of at least one continuous, substantially vertical side wall 14, a bottom surface 16 and a top surface 18, which create an interior space. Other configurations may be used to form the shape of the vessel 12, such as, for example, any geometric design having a plurality of vertically disposed, interconnected side walls capable of confining a liquid in an interior space. Top surface 18 contains an opening, portal or vent, which, for purposes of this disclosure, is referred to as opening 20. Water 15 and other materials used in the cyclopropene generator 10 added to the vessel 12 through opening 20. As will be described hereinbelow, opening 20 performs another function in the practice of the invention. Bottom surface 16 contains an opening 22, which comprises sealing means 24. Contained within, and sealably connected to the sealing means 24, is nozzle 25. The opening, or output end, of nozzle 25 is directed toward the interior space of vessel 12. Conduit 27 is sealably connected to the input end of nozzle 25. The other end of conduit 27 is sealably connected to a sparge source 30, which generates the gas necessary to provide the bubbling action. Figure 3 shows an alternate location for delivering the sparge gas into the interior space of the vessel 12.

Figure 1 shows the bottom surface 16 to be substantially flat or substantially 90 degrees from the surface of side wall 14. Figure 2 shows a preferred embodiment of the cyclopropene generator of the invention wherein the bottom surface is sloped, represented by the number 26, at an angle of more than 0 to less than 90 degrees, as measured from the hypothetical horizontal plane H, represented by a broken line. The preferred slope is from 45 to 75 degrees, with the most preferred being from 50 to 70 degrees. The sloped bottom wall 26 of the preferred embodiment of Figure 2 generally defines a conical shape, with the tip of the cone situated in a substantially downward position. At the base of this conically shaped surface is opening 22. As a result of the effects of gravity, the sloped bottom wall 26 insures that all of the active material added to the vessel 12 is contacted by the gas released through nozzle 25 during the sparge operation. Since all of the cyclopropene bound within the complex is released by the method and device of the present invention, it is thus possible to calculate the exact amount of powdered complex required to deliver a precise amount of cyclopropene to treat the plants located in a specific storage facility of known volume.

The sparge gas may consist of any gas suitable for enabling the liberation of the cyclopropene molecule from its cyclodextrin carrier. Preferred are inert gases. Examples of suitable gasses are air, nitrogen and carbon dioxide. Nitrogen or carbon dioxide are preferred over air, because they create a non-flammable mixture with the very reactive cyclopropene gas. Some substituted cyclopropenes are more reactive than others. For example, as described hereinbelow, a preferred cyclopropene molecule is 1-methylcyclopropene and is considered very volatile, thus mandating the use of a non-reactive gas.

The sparge source 30 may be a pressure vessel which encapsulates the sparge gas under pressure. When called upon to be released into the vessel 12, a valve means 32 may be employed to meter the sparge gas at the desired rate. Also, the sparge source 30 may be connected to a pump means 34, Figure 2, which may be regulated to pump gas into the vessel 12 at a desired rate. An exemplary air pump is commercially available under the name Sensidyne AP060SEEEF60C1, which is available from Sensidyne, Inc., Clearwater, FL, USA. The sparge source may also be a pressure container in combination with a pump means, as may be preferred by the operator. Since the cyclopropene generator 10 is meant to be very portable, the pump means 34 may be designed to run off of the AC current of the storage facility in which it is being used, or it may contain at least one battery 36, also shown in Figure 2, which provides the necessary electrical energy to power the pump means 34. If carbon dioxide is utilized, it is possible to employ a carbon dioxide generator in proximity to the cyclopropene generator, instead of transporting the carbon dioxide to the work site in a storage vessel.

The ratio of the amount of water to the amount of cyclopropene/carrier complex will depend on the concentration of active ingredient in the complex. In a preferred embodiment of the invention, the cyclopropene active ingredient is 1-methylcyclopropene (1-MCP) and the carrier is alpha-cyclodextrin. The amount of 1-MCP within the complex will range from 0.01% to 5.0%, based on weight. Preferably, the amount is from 0.1% to 4.0%, most preferably, from 0.1% to 3.5%. For example, if the amount of 1-MCP in the complex is 0.14%, the ratio of water to complex, measured in units of grams per milliliter or kilograms per liter, is from 0.5 to 20. More preferred is the range of 1.5 to 10.0, with 3.0 to 5.0 being the most preferred. Where the amount of 1-MCP in the complex is 3.3%, the water to complex ratio is from 5 to 250, with 15 to 150 being more preferred. The most preferred is from 25 to 60.

The cylcopropene generator of the present invention may be used to treat both small volume storage spaces, such as trucks or land/sea cargo vessels and large volume plant storage facilities, such as warehouses. For large storage facilities,the amount of the powdered cyclopropene/carrier complex that is required for treatment ranges from approximately 1 gram to approximately 7,000 grams. The actual amount will depend on the size of the storage facility, the type of plants to be protected and the concentration of the active compound in the complex.

The rate at which the sparge gas is charged to the water in vessel 12 depends on the amount of complex being used, the volume of water and the desired release rate. Gas sparge rates are defined in liters/hour. For a cyclopropene generator designed to treat a warehouse sized storage facility, the gas sparge rate may be from 30 to 500 L/Hr. The preferred range is from 100 to 400 L/Hr., with the most preferred being from 200 to 300 L/Hr. Although gas sparge bubbles of any size will perform their intended function, it has been recognized that the smaller the bubble, the more efficient is the liberation and transport of the cyclopropene gas.

The cyclopropene generator may be run at substantially ambient temperature. However, thermal input may be added, if necessary to facilitate the treatment process, but care must be taken not to employ too much heat. Excess heat may lead to the degradation of the cyclopropene molecule. The temperature range within which the cyclopropene generator may be run is from 0° C to 50° C. Preferred is from 5° to 45° C, with the most preferred being from 10° to 35° C.

After being liberated from its carrier complex, the cyclopropene is driven to the surface of the water and then into the air by continued bubbling action. The cyclopropene laden air is forced through opening 20 at the top of the cyclopropene generator 10 and into the enclosed environment of the storage facility where it is allowed to circulate and contact the plants it is intended to treat.

The cyclopropene generator 10 of the present invention may be utilized for either small or large scale plant storage facilities, as indicated above. However, for extremely large facilities, it may be necessary to provide more than one generator. In addition, each generator, whether functioning alone in a specific facility or in conjunction with other generators, may be set up to deliver a variable dose over a set period of time. For example, in order to protect an operator from exposure to the cyclopropene gas, the generator may be fitted with a timer or delay switch so that for a pre-set time after being turned on, the generator may either delay the bubbling action or do so at a much slower rate, so as to permit the operator to exit the sealed storage chamber. Further, certain plants such as tulip bulbs and stored pears require repeat treatments to maintain freshness. Approximately every 10 days, the generator could be timed to turn on and pump sparge gas through the aqueous suspension to deliver a specific concentration of cyclopropene gas. It has been found that if no sparge gas is being pumped through the aqueous suspension, the amount of cyclopropene that is liberated from the complex is very minimal. In this way, the generator can be cycled to periodically deliver as much cyclopropene as and when needed.

The active cyclopropene compound released from the complex by the cyclopropene generator comprises a cyclopropene of the formula: 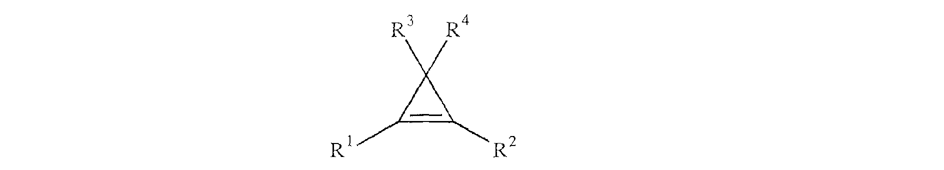 wherein:
1) each R¹, R², R³, and R⁴ is independently a group of the formula:

   -(L)ₙ-Z

   wherein:
   i) n is an integer from 0 to 12;
   ii) each L is independently selected from a member of the group D1, D2, E or J wherein:
      D1 is of the formula: 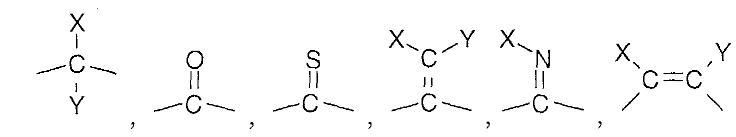 or 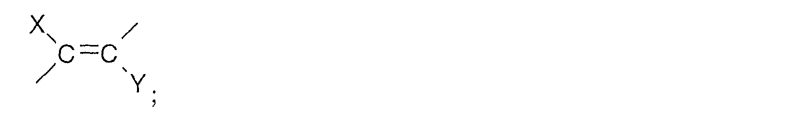
      D2 is of the formula: 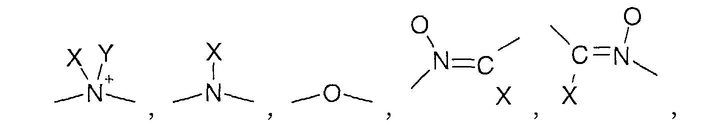 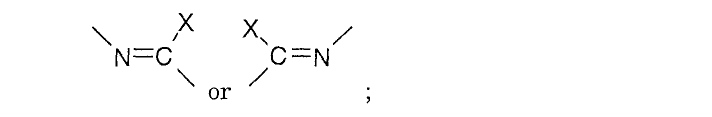
      E is of the formula: 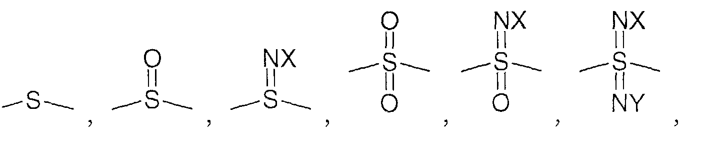 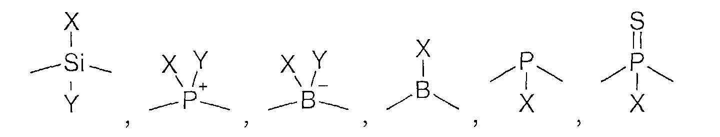 or 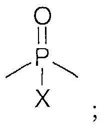 and
      J is of the formula: 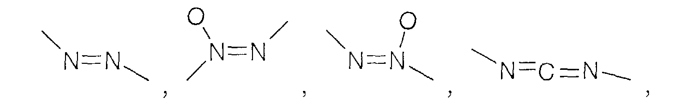 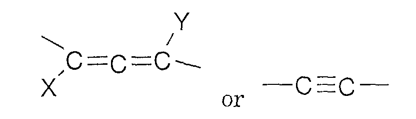
      wherein:
      A) each X and Y is independently a group of the formula:

         -(L)ₘ-Z;

         and
      B) m is an integer from 0 to 8; and
      C) no more than two E groups are adjacent to each other and no J groups are adjacent to each other;
   iii) each Z is independently selected from:
      A) hydrogen, halo, cyano, nitro, nitroso, azido, chlorate, bromate, iodate, isocyanato, isocyanido, isothiocyanato, pentafluorothio, or
      B) a group G, wherein G is an unsubstituted or substituted; unsaturated, partially saturated, or saturated; monocyclic, bicyclic, tricyclic, or fused; carbocyclic or heterocyclic ring system wherein;
         1) when the ring system contains a 3 or 4 membered heterocyclic ring, the heterocyclic ring contains 1 heteroatom;
         2) when the ring system contains a 5, or more, membered heterocyclic ring or a polycyclic heterocyclic ring, the heterocyclic or polycyclic heterocyclic ring contains from 1 to 4 heteroatoms;
         3) each heteroatom is independently selected from N, O, and S;
         4) the number of substituents is from 0 to 5 and each substituent is independently selected from X;
2) the total number of non-hydrogen atoms in each compound is 50 or less; and
its enantiomers, stereoisomers, salts, and mixtures thereof.

For the purposes of this invention, in the structural representations of the various L groups each open bond indicates a bond to another L group, a Z group, or the cyclopropene moiety. For example, the structural representation 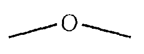 indicates an oxygen atom with bonds to two other atoms; it does not represent a dimethyl ether moiety.

As used herein, the term "halo" means fluorine, chlorine, bromine, and iodine.

Preferably, the number of non-hydrogen atoms in each compound is less than 25. More preferably, the number of non-hydrogen atoms in each compound is less than 20. Even more preferably, the number of non-hydrogen atoms in each compound is less than 13. Most preferably, the number of non-hydrogen atoms in the compound is less than 7.

Preferably, two of R¹, R², R³, and R⁴ are hydrogen. More preferably, R¹ and R² are hydrogen or R³ and R⁴ are hydrogen. Even more preferably, R², R³, and R⁴ are hydrogen or R¹, R², and R⁴ are hydrogen. Most preferably, R², R³, and R⁴ are hydrogen.

Preferably, R¹ is (C₁-C₁₀) alkyl and R², R³, and R⁴ are hydrogen. More preferably, R¹ is (C₁-C₈) alkyl and R², R³, and R⁴ are hydrogen. Even more preferably R¹ is (C₁-C₄) alkyl and R², R³, and R⁴ are hydrogen. Most preferably, R¹ is methyl and R², R³, and R⁴ are hydrogen.

Typical R¹, R², R³, and R⁴ groups include, for example: alkenyl, alkyl, alkynyl, acetylaminoalkenyl, acetylaminoalkyl, acetylaminoalkynyl, alkenoxy, alkoxy, alkynoxy, alkoxyalkoxyalkyl, alkoxyalkenyl, alkoxyalkyl, alkoxyalkynyl, alkoxycarbonylalkenyl, alkoxycarbonylalkyl, alkoxycarbonylalkynyl, alkylcarbonyl, alkylcarbonyloxyalkyl, alkyl(alkoxyimino)alkyl, carboxyalkenyl, carboxyalkyl, carboxyalkynyl, dialkylamino, haloalkoxyalkenyl, haloalkoxyalkyl, haloalkoxyalkynyl, haloalkenyl, haloalkyl, haloalkynyl, hydroxyalkenyl, hydroxyalkyl, hydroxyalkynyl, trialkylsilylalkenyl, trialkylsilylalkyl, trialkylsilylalkynyl, dialkylphosphonato, dialkylphosphato, dialkylthiophosphato, dialkylaminoalkyl, alkylsulfonylalkyl, alkylthioalkenyl, alkylthioalkyl, alkylthioalkynyl, dialkylaminosulfonyl, haloalkylthioalkenyl, haloalkylthioalkyl, haloalkylthioalkynyl, alkoxycarbonyloxy; cycloalkenyl, cycloalkyl, cycloalkynyl, acetylaminocycloalkenyl, acetylaminocycloalkyl, acetylaminocycloalkynyl, cycloalkenoxy, cycloalkoxy, cycloalkynoxy, alkoxyalkoxycycloalkyl, alkoxycycloalkenyl, alkoxycycloalkyl, alkoxycycloalkynyl, alkoxycarbonylcycloalkenyl, alkoxycarbonylcycloalkyl, alkoxycarbonylcycloalkynyl, cycloalkylcarbonyl, alkylcarbonyloxycycloalkyl, carboxycycloalkenyl, carboxycycloalkyl, carboxycycloalkynyl, dicycloalkylamino, halocycloalkoxycycloalkenyl, halocycloalkoxycycloalkyl, halocycloalkoxycycloalkynyl, halocycloalkenyl, halocycloalkyl, halocycloalkynyl, hydroxycycloalkenyl, hydroxycycloalkyl, hydroxycycloalkynyl, trialkylsilylcycloalkenyl, trialkylsilylcycloalkyl, trialkylsilylcycloalkynyl, dialkylaminocycloalkyl, alkylsulfonylcycloalkyl, cycloalkylcarbonyloxyalkyl, cycloalkylsulfonylalkyl, alkylthiocycloalkenyl, alkylthiocycloalkyl, alkylthiocycloalkynyl, dicycloalkylaminosulfonyl, haloalkylthiocycloalkenyl, haloalkylthiocycloalkyl, haloalkylthiocycloalkynyl; aryl, alkenylaryl, alkylaryl, alkynylaryl, acetylaminoaryl, aryloxy, alkoxyalkoxyaryl, alkoxyaryl, alkoxycarbonylaryl, arylcarbonyl, alkylcarbonyloxyaryl, carboxyaryl, diarylamino, haloalkoxyaryl, haloaryl, hydroxyaryl, trialkylsilylaryl, dialkylaminoaryl, alkylsulfonylaryl, arylsulfonylalkyl, alkylthioaryl, arylthioalkyl, diarylaminosulfonyl, haloalkylthioaryl; heteroaryl, alkenylheteroaryl, alkylheteroaryl, alkynylheteroaryl, acetylaminoheteroaryl, heteroaryloxy, alkoxyalkoxyheteroaryl, alkoxyheteroaryl, alkoxycarbonylheteroaryl, heteroarylcarbonyl, alkylcarbonyloxyheteroaryl, carboxyheteroaryl, diheteroarylamino, haloalkoxyheteroaryl, haloheteroaryl, hydroxyheteroaryl, trialkylsilylheteroaryl, dialkylaminoheteroaryl, alkylsulfonylheteroaryl, heteroarylsulfonylalkyl, alkylthioheteroaryl, heteroarylthioalkyl, diheteroarylaminosulfonyl, haloalkylthioheteroaryl; heterocyclyl, alkenylheteroycycyl, alkylheteroycycyl, alkynylheteroycycyl, acetylaminoheterocyclyl, heterocyclyloxy, alkoxyalkoxyheterocyclo, alkoxyheterocyclyl, alkoxycarbonylheterocyclyl, heterocyclylcarbonyl, alkylcarbonyloxyheterocyclyl, carboxyheterocyclyl, diheterocyclylamino, haloalkoxyheterocyclyl, haloheterocyclyl, hydroxyheterocyclyl, trialkylsilylheterocyclyl, dialkylaminoheterocyclyl, alkylsulfonylheterocyclyl, alkylthioheterocyclyl, heterocyclylthioalkyl, diheterocyclylaminosulfonyl, haloalkyllthioheterocyclyl; hydrogen, fluoro, chloro, bromo, iodo, cyano, nitro, nitroso, azido, chlorato, bromato, iodato, isocyanato, isocyanido, isothiocyanato, pentafluorothio; acetoxy, carboethoxy, cyanato, nitrato, nitrito, perchlorato, allenyl; butylmercapto, diethylphosphonato, dimethylphenylsilyl, isoquinolyl, mercapto, naphthyl, phenoxy, phenyl, piperidino, pyridyl, quinolyl, triethylsilyl, trimethylsilyl; and substituted analogs thereof.

Typical G groups include, for example: saturated or unsaturated cycloalkyl, bicyclic, tricyclic, polycyclic, saturated or unsaturated heterocyclic, unsubstituted or substituted phenyl, naphthyl, or heteroaryl ring systems such as, for example, cyclopropyl, cyclobutyl, cyclopent-3-en-1-yl, 3-methoxycyclohexan-1-yl, phenyl, 4-chlorophenyl, 4-fluorophenyl, 4-bromophenyl, 3-nitrophenyl, 2-methoxyphenyl, 2-methylphenyl, 3-methyphenyl, 4-methylphenyl, 4-ethylphenyl, 2-methyl-3-methoxyphenyl, 2,4-dibromophenyl, 3,5-difluorophenyl, 3,5-dimethylphenyl, 2,4,6-trichlorophenyl, 4-methoxyphenyl, naphthyl, 2-chloronaphthyl, 2,4-dimethoxyphenyl, 4-(trifluoromethyl)phenyl, 2-iodo-4-methylphenyl, pyridin-2-yl, pyridin-3-yl, pyridin-4-yl, pyrazinyl, pyrimidin-2-yl, pyrimidin-4-yl, pyrimidin-5-yl, pyridazinyl, triazol-1-yl, imidazol-1-yl, thiophen-2-yl, thiophen-3-yl, furan-2-yl, furan-3-yl, pyrrolyl, oxazolyl, isoxazolyl, thiazolyl, isothiazolyl, oxadiazolyl, thiadiazolyl, quinolyl, isoquinolyl, tetrahydrofuryl, pyrrolidinyl, piperidinyl, tetrahydropyranyl, morpholinyl, piperazinyl, dioxolanyl, dioxanyl, indolinyl and 5-methyl-6-chromanyl, adamantyl, norbornyl, and their substituted analogs such as, for example: 3-butyl-pyridin-2-yl, 4-bromo-pyridin-2-yl, 5-carboethoxy-pyridin-2-yl, 6-methoxyethoxy-pyridin-2-yl.

To permit the handling and transport of cyclopropene molecules it is preferable to form a complex of the cyclopropene compound with agents such as cyclodextrins, crown ethers, polyoxyalkylenes, polysiloxanes, and zeolites. More preferred complexing agents include α-cyclodextrin, β-cyclodextrin, and γ-cyclodextrin. The most preferred complexing agent, particularly when the cyclopropene compound is 1-methylcyclopropene, is α-cyclodextrin. The most preferred complexing agent will vary depending upon the size of the R substituent. However, as one skilled in the art will appreciate, any cyclodextrin or mixture of cyclodextrins, cyclodextrin polymers as well as modified cyclodextrins can also be utilized pursuant to the present invention. Cyclodextrins are available from Wacker Biochem Inc., Adrian, MI or Cerestar USA, Hammond, IN, as well as other vendors.

The materials containing the cyclopropene compound of the present invention are prepared by contacting the cyclopropene compound with a solution or slurry of a complexing agent and then isolating the material, again using general processes disclosed in U. S. Patent No. 6,017,849, In the case of 1-methylcyclopropene, 1-methylcyclopropene gas is bubbled through a solution of α-cyclodextrin in water from which the complex first precipitates and is then isolated by filtration.

It is often desirable to include in the material containing at least one cyclopropene compound, one or more adjuvants or excipients, such as extenders, binders, lubricants, surfactants and/or dispersants, wetting agents, spreading agents, dispersing agents, stickers, adhesives, defoamers, thickeners, emulsifying agents and the like.

As used herein, all percentages are percent by weight and all parts are parts by weight, unless otherwise specified, and are inclusive and combinable. All ratios are by weight and all ratio ranges are inclusive and combinable. All molar ranges are inclusive and combinable.

### EXAMPLES

The following examples show the effectiveness of the present invention. The first example compares alternate means of releasing 1-methylcyclopropene (1-MCP) into an enclosed atmosphere from its 1-MCP/alpha-cyclodextrin (α-CD) complex with the subject matter of the present invention.

### EXAMPLE 1:

This is a comparison of alternate means intended to facilitate the release of 1-MCP from its 1-MCP/α-CD complex into a small volume environment.

Fifty grams of 0.14% concentration of 1-MCP/α-CD complex in powdered form was placed into a 1000ml beaker which also contained 250 ml of water. Into the beaker was also placed a Mini Jet® MN404 submersible pump (available from IPSD, Inc., San Diego, CA) which was set at a flow rate of approximately 200 liters/hour. This system was then placed into a 36 liter Plexiglas airtight chamber fitted with a septum for inserting a syringe for gas sampling. The temperature was set at 22° C.

After the chamber was sealed, the pump was turned on, creating a fountain-type flow in the beaker. The atmosphere of the chamber was sampled periodically to monitor the release of 1-MCP. The analysis was performed by gas chromatography using a flame ionization detector.

This procedure was repeated twice without using the pump for comparison purposes. The first comparison involved mixing the powdered suspension by swirling the contents of the beaker for 30 seconds, every 5 minutes. The second comparison involved using a 2 inch magnetic stir bar and a stir plate instead a pump to constantly mix the suspension. Table 1 shows the results.

**Table 1**

| | Percent 1-MCP Released | | |
|---|---|---|---|
| Time | Fountain Pump | Comparative 1 (mix every 5 min.) | Comparative 2 (stir bar) |
| | | | |
| 0.08 | 14 | | |
| 0.17 | 43 | 4 | 4 |
| 0.42 | 57 | 6 | 6 |
| 1.0 | 79 | 9 | 9 |
| 1.5 | 86 | | 14 |
| 2.5 | 90 | | 21 |
| 3.0 | | 14 | |
| 4.0 | | 16 | |
| 5.5 | | 17 | 43 |

The above table shows that the fountain pump was far more efficient as a means to release 1-MCP into the atmosphere, with 90% being released after only 2.5 hours. By comparison, only *17%* was released by periodic agitation even after 5.5 hours and 43% via constant stirring after 5.5 hours.

### EXAMPLE 2:

This example exhibits the efficacy of gas sparge to accelerate the release of 1-MCP in a small scale environment.

Fifty grams of a 0.14% 1-MCP/α-CD complex in powdered form was placed into a 600 ml beaker which contained 250 ml of water. Also present in the beaker is a 10 inch long segment of Bubble Wall air diffusers (IPSD, Inc. San Diego, CA). This was connected to a Tetratec® air pump (Tetra Co., Blacksburg, VA) via flexible connective tubing. The pump was set at a rate of 100 liters/hour. This system was then placed in a 36 liter Plexiglas airtight chamber fitted with a septum for inserting a syringe for gas sampling.

After the chamber was sealed, the pump was turned on to sparge gas through the aqueous suspension. The air in the chamber was sampled periodically to determine the rate of 1-MCP released. Analysis was performed by gas chromatography using a flame ionization detector. Table 2 shows the results.

**TABLE 2**

| Time (Hrs) | Percent 1-MCP Released (gas sparge) |
|---|---|
| 0.17 | 42 |
| 0.42 | 58 |
| 0.75 | 75 |
| 1.0 | 83 |
| 2.0 | 92 |

After only 2 hours, 92% of the 1-MCP was released by using gas sparge.

### EXAMPLE 3:

The release of 1-MCP into a large scale environment, such as a food storage warehouse, by using a gas sparge is shown in this example.

Thirty four hundred grams of a 0.14% 1-MCP/α-CD complex in powdered form was placed into a 20 liter plastic vessel containing 11 liters of water and a 56 inch segment of a Bubble Wall air diffuser (IPSD, Inc., San Diego, CA). The air diffuser is hooked to a Pro Gold® Profile 400 air pump via flexible connective tubing. The pump was set at the rate of 400 liters of air /hour. The temperature was set at 22° C.

The vessel was covered and fitted with an outlet tube through which all of the escaping air had to pass. After the pump was turned on, the air exiting the vessel was sampled periodically for 1-MCP content. Analysis was by gas chromatography using a flame detector. Table 3 shows the results.

**TABLE 3**

| Time (hrs.) | Percent 1-MCP Released (gas sparge) |
|---|---|
| 0.17 | 12 |
| 0.33 | 29 |
| 0.5 | 48 |
| 0.75 | 70 |
| 1.0 | 84 |
| 1.25 | 92 |
| 1.5 | 96 |
| 2.0 | 100 |

As shown above, the cyclopropene generator of the present invention liberates cyclopropene very rapidly and efficiently when it is set up to operate in a large volume facility.

### EXAMPLE 4:

This example shows the efficacy of the cyclopropene generator for a large volume application using a higher concentration of 1-MCP in the complex.

One hundred eighty two grams of a 3.3% concentration of a 1-MCP/α-CD powder complex was placed in an 11 liter plastic vessel having a conical shaped bottom (at a 60 degree angle from horizontal). To the vessel was then added 8 liters of water. The vessel was fitted with a Kordon Mist Air® fine air diffuser (Novalek, Inc., Hayward, CA) hooked to a Sensidyne AP060SEEF60C1 air pump (available from Sensidyne Inc., Clearwater, FL which was set at a pumping rate of 204 liters of air/hour. The vessel was covered and then fitted with an outlet tube through which all of the vented air passed. The temperature was set at 22° C.

After the pump was turned on, the exiting air was sampled periodically for 1-MCP content. Analysis was by gas chromatography using a flame ionization detector. Table 4 shows the results.

**TABLE 4**

| Time (hrs.) | Percent 1-MCP Released (gas sparge) |
|---|---|
| 1.0 | 85 |
| 1.85 | 100 |

This compares very favorably with the release rate of 1-MCP achieved on a much smaller scale as exemplified in Examples 1 and 2, as well as for the 0.14% formulation shown in Example 3 related to large volume applications.

## Claims

1. A device for generating a cyclopropene gas comprising:
- a vessel having at least one continuous, substantially vertical side wall and a bottom surface which create an interior space capable of retaining an aqueous suspension, wherein the aqueous suspension comprises a cyclopropene/carrier molecule complex;
- at least one nozzle having an input end and an output end, said nozzle sealably secured within a hole in the vessel and situated such that the input end is directed to the exterior of the vessel and the output end is directed to the interior space of the vessel;
- means for generating a sparge gas through the aqueous suspension, said means disposed in close proximity to said vessel; and
- a conduit having an input end and an output end, said input end sealably connected to the means for generating the sparge gas and said output end sealably connected to the input end of the nozzle.

2. The device of claim 1 wherein said means for generating a sparge gas is selected from the group consisting of a pump means and a pressurized vessel.

3. The device of claim 1 wherein said bottom surface defines a substantially conical shape such that the apex of the substantially conical shape is positioned at the center of said bottom surface and is oriented substantially downward.

4. The device of claim 1 wherein the nozzle is sealably secured within a hole in the bottom surface.

5. A method for generating a cyclopropene gas comprising the steps of adding to water which is contained within a vessel, a cyclopropene/carrier complex and then forcing sparge gas through the water to liberate the cyclopropene gas from the cyclopropene/carrier complex.

6. The method of claim 5 wherein the sparge gas is an inert gas.

7. The method of claim 5 wherein the cyclopropene gas is used to inhibit the ethylene response in plants contained within a large volume storage facility.

8. The method of claim 5 wherein the complex is 1-methylcyclopropene/alpha-cyclodextrin.

9. The method of claim 5 wherein the amount of cyclopropene/cyclodextrin complex that may be added to the water is from 1 gram to 7,000 grams.

10. The method of claim 5 wherein the delivery rate of the sparge gas through the water is from 30 to 500 liters/hour.
